Europäisches Patentamt

(19) European Patent Office

Office européen des brevets

(11) Publication number: **0 062 970**
**B1**

(12) **EUROPEAN PATENT SPECIFICATION**

(45) Date of publication of patent specification: **05.02.86**

(51) Int. Cl.⁴: **B 60 C 11/04,** B 60 C 11/08

(21) Application number: **82301293.5**

(22) Date of filing: **15.03.82**

(54) **Tyre for a two wheeled single-track vehicle.**

(30) Priority: **26.03.81 US 247873**

(43) Date of publication of application:
**20.10.82 Bulletin 82/42**

(45) Publication of the grant of the patent:
**05.02.86 Bulletin 86/06**

(84) Designated Contracting States:
**AT DE FR IT**

(56) References cited:
**DE-C- 614 574**
**FR-A-2 255 191**
**GB-A-1 202 283**
**GB-A-2 022 526**
**NL-A-7 010 460**
**US-A-3 438 827**

(73) Proprietor: **DUNLOP LIMITED**
**Silvertown House Vincent Square**
**London SW1P 2PL (GB)**

(72) Inventor: **Mills, Anthony M.**
**394 Shetland Drive**
**Williamsville New York 14221 (US)**
Inventor: **Egan, Daniel C.**
**7858 Brackett Road**
**Akron New York 14001 (US)**

(74) Representative: **Treves, Barry William et al**
**Dunlop Limited Group Patent Department**
**P.O.Box 504**
**Erdington Birmingham B24 9QH (GB)**

Courier Press, Leamington Spa, England.

## Description

The present invention relates to a tyre for a two wheeled single tracked vehicle e.g. a motorcycle.

Tyre designers are continually seeking to improve on previous tread designs to optmise often conflicting performance requirements. A primary requirement for a suitable tyre tread design is adequate clearance of water from the portion of the tread which contacts the road surface. i.e. the contact patch, to prevent hydroplaning and provide sure handling on wet roads. The tread design should also have minimum sensitivity to road surface characteristics and must also have an adequate braking capability under both wet and dry conditions. The tread design should also reduce tread wear as much as possible.

For water clearance, various groove designs have been provided in tyre treads to remove water from the contact patch. In many instances of prior art tyre treads, water removing grooves run continuously and circumferentially of the tyre. Unfortunately, a continuous circumferentially-extending water-removing groove can cause problems when the contact patch area is relatively narrow, such as occurs in a motorcycle tyre which has a narrow rounded tread profile, as the groove can engage with and be guided by longitudinally extending shoulders on a road surface, such as at rain grooves, joints and lane marking strips. On a road surface provided with such rain grooves, joints or lane marking strips, it is possible for a water channelling groove on the tyre tread to follow the road surface characteristic instead of the command of the driver thus leading to control problems. Turning the wheel to dislodge a tyre from a road surface characteristic can be difficult, requiring a jerking turning motion which may result in an unsafe operation of the vehicle e.g. a motorcycle.

A tyre is known in accordance with the prior art portion of Claim 1, (Figure 2 of German Patent No. DE—C—614 574) in which the tread is divided into blocks which extend generally diagonally from one side of the tyre to the other. The blocks are separated from each other by grooves each of which comprises sections which are arranged to extend alternately circumferentially of the tyre and perpendicularly thereto. Thus a plurality of right-angled corners are formed in the grooves which would restrict flow from the contact patch.

In accordance with the invention there is provided a tyre for a two wheeled single track vehicle, comprising a plurality of tread blocks each one of which extends generally diagonally from one side of the tread to the other, said blocks being separated by a plurality of first grooves spaced apart around the circumference of the tyre, extending continuously from one side of said tread to the other, and each comprising an intermediate portion which extends substantially circumferentially of the tyre in the centre of the tread, the intermediate portions of two adjacent first grooves being spaced by a tread block characterised in that each of said first grooves comprises diagonal portions running from the respective ends of the intermediate portion to the respective tread edge.

The tyre tread of the present invention was designed in an attempt to provide adequate water removal from the contact patch area while maximising other desirable tread characteristics and improving driver control especially when the tyre is travelling over rain grooves and the like.

The diagonally oriented groove construction reduces the possibility of the water channelling grooves locking onto and thus following shoulders formed on longitudinal grooves, joints or lane marking strips provided on a road surface.

Water which would otherwise be trapped between tread and ground in the contact patch is removed by the diagonally running water channelling grooves, while the edges of the water channelling grooves themselves and additional sipes and grooves provided in the tread cut any remaining water film to provide a solid tyre-to-road contact patch.

The generally diagonal water channelling grooves co-operate with other circumferentially running water channelling grooves to provide a high degree of water removal from the contact patch area during both straight running of the tyre as well as running on a portion of the tread adjacent the sidewall, such as occurs during hard turning of a motorcycle.

The tyre may comprise circumferentially spaced holes or additional sipes in the tread for absorbing minute water particles remaining at the contact patch area thereby increasing grip between the tread and the road surface.

The tyre according to the invention preferably has a high ratio of contact surface area to groove area which increases braking friction and allows the tyre load and torque to be distributed more evenly over a larger area, and also large unbroken tread blocks to stabilise the contact patch thus reducing tread pattern squirm.

One embodiment of the invention and a modification thereto will now be described by way of example with reference to the accompanying drawings, of which:

Figure 1 illustrates in perspective view a motorcycle tyre according to the invention;

Figure 2 shows a front view of a part of the tread of the tyre illustrated in Figure 1;

Figure 3 illustrates a sectional view taken along the line 3—3 in Figure 2;

Figure 4 illustrates a sectional view taken along the line 4—4 in Figure 2;

Figure 5 illustrates a sectional view taken along 5—5 in Figure 2;

Figure 6 illustrates a sectional view taken along the line 6—6 in Figure 2, and

Figure 7 shows a front view of a part of a modified tyre.

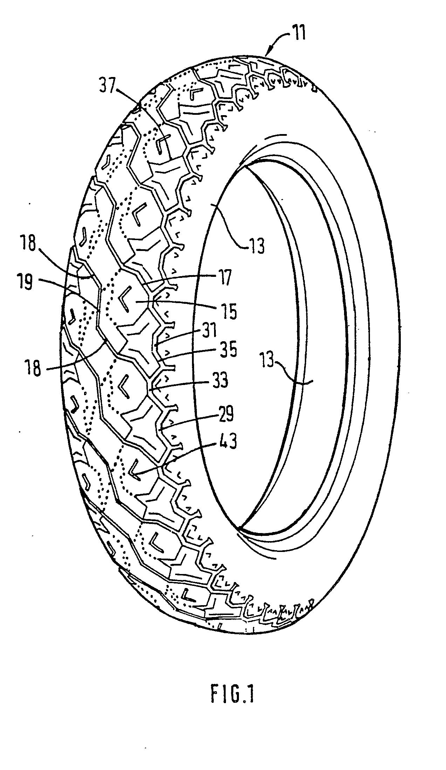

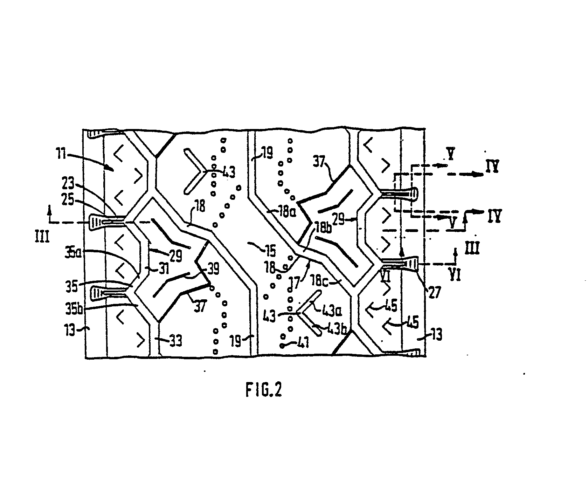

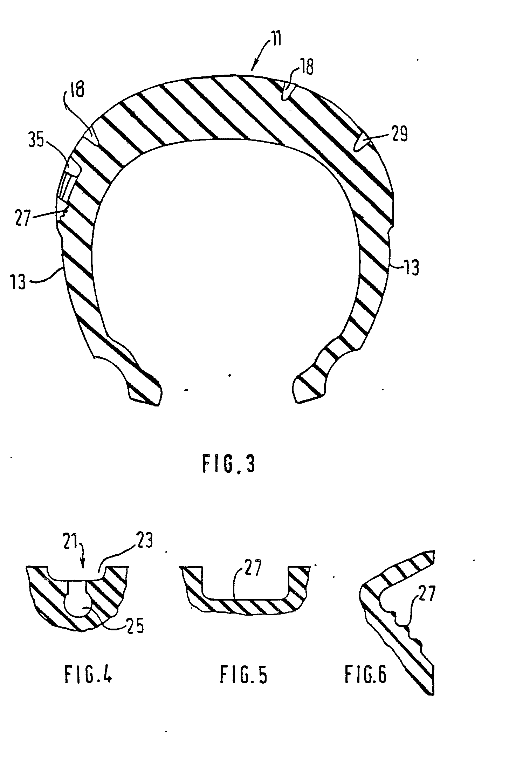

Figures 1 and 2 shows a tyre having a tread 11 connected to sidewalls 13 and formed with a plurality of generally diagonally-extending water channelling first grooves 17 which run from one side of the tread to the other. The water channelling grooves 17 define between them a plurality of road-contacting tread blocks 15. The generally diagonal water channelling grooves ensure the absence of a continuous groove running circumferentially of the tyre, and prevent the tyre from locking onto a longitudinally-oriented shoulder which might direct or deflect the travel path of the tyre in use. The water channelling grooves 17 each comprise an intermediate portion 19 which runs in the circumferential direction of a tyre and diagonal portions 18 running in zig-zag fashion from each of the opposite ends of the intermediate portions 19 to respective edges of the tread. Each of the diagonal portions 18 is formed by three connected groove segments 18a, 18b and 18c. Segments 18a and 18c are angled approximately 40° from the circumferential centre line of the tyre, while segment 18b is angled approximately 70° from the said line. The intermediate portions 19 of grooves 17 align in a circumferential direction of the tyre in the centre of tread 11 and are separated by portions of the blocks 15 defined by adjacent grooves 17.

A pair of water channelling second grooves 29 are also provided adjacent respective edges of the tyre tread 11. These grooves run circumferentially of the tyre in a zig-zag pattern. The terminating ends of the diagonal water channelling grooves 17 (that is the terminating ends of groove portions 18 running from the intermediate portions 19) are respectively connected with the grooves 29.

The grooves 29 have successive circumferentially-extending grooves portions 31 and 33 which are connected by substantially V-shaped groove portions 35. The legs 35a, 35b of V-shaped portions 35 are angled approximately 40° from the circumferential centre line of the tyre. The successive circumferentially-extending groove portions 31 and 33 are offset from one another by substantially the width of the second groove 29. The offsetting of the circumferentially-extending second groove portions 31 and 33 and their interconnection by the substantially V-shaped groove portion 35 ensures the absence of a straight groove pattern running circumferentially of the tyre to prevent locking of the second groove 29 with a longitudinal roadway surface characteristic when the tyre is running adjacent the edges of the tread.

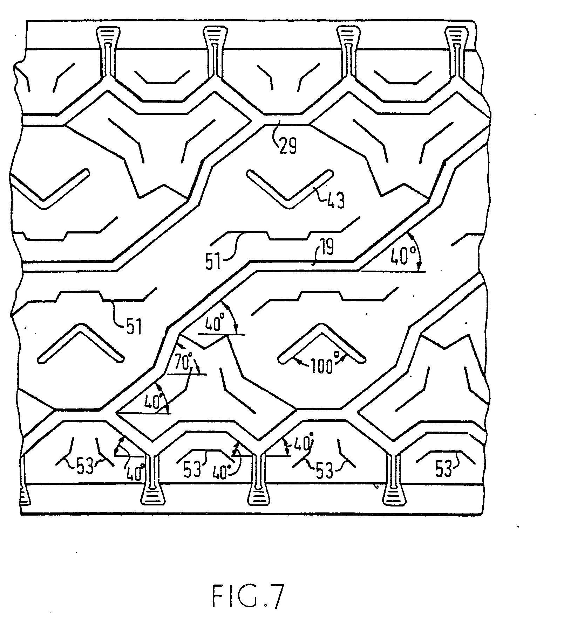

As clearly recognised, water in the contact patch area of the tread, that is substantially in the middle of the tread is effectively conducted away by the grooves 17. In addition, water is conducted away from the first grooves 17 into the second grooves 29 which are connected to the opposite ends of the grooves 17. Additional water channelling away from the second grooves 29 to the edge of the tread is provided by third grooves 21 which interconnect with grooves 29 and are regularly spaced at the edges of the tread circumferentially around the tyre. The grooves 21 are each formed in two sections, the first section 23 being shallow but wide and the second section 25 being deep but narrow and of tunnel-like configuration, as more clearly illustrated in Figure 4. At the terminus of the grooves 21 is a flared portion 27 having a ribbed surface, as more clearly illustrated in Figure 6.

The blocks 15 defined by adjacent diagonal grooves 17 are further broken into smaller block by sipes 37. The sipes 37 are much narrower than water channelling grooves 17, 21 and 29. The sipes increase the compliance of the tread by diminishing the size of the tread blocks and cannot lock onto a longitudinal shoulder on the road. They also absorb water at the contact patch area, and provide additional road gripping edges. Additional sipes 39 are also provided within the blocks 15 for the same reason. Although the sipes 37 are arranged to sub-divide the blocks 15, substantial portions of the blocks 15 at the central portion of the tread 11 remain undivided to provide a large unbroken road contacting surface which reduces tread pattern squirm.

As further illustrated in Figures 1 and 2, additional V-shaped grooves 43 are provided within the blocks 15 and spaced along the circumference of the tyre on opposite sides of the centre of the tread. The angle between the legs 43a and 43b of the V-shaped grooves is approximately 100°. These additional V-shaped grooves also collect water which may be present in the contact patch area, add compliance to the tread surface, provide additional edges which facilitate gripping of the tread to a road surface and also dissipate heat.

Holes 41 may also be provided within the blocks 15 along the circumferential extent of the tyre and absorb minute water droplets at the contact patch area. The holes first fill with water droplets and air is compressed between the droplets residing in the holes and the road surface. The holes effectively act as gripping cells which provide added traction on a road surface. The air retained in the holes at the contact patch area also provides additional compliance to the tread pattern thus further assisting in tyre gripping and braking action.

The spacing of the holes to each other and to other grooved areas of the tyre is at least one quarter of an inch ($\frac{1}{4}''$), approximately 6 mm, to ensure the holes will not tear into each other or other structures upon the application of force to the tyre tread such as during braking and quick accleration. In lieu of holes 41, sipes 51, similar to sipes 37, can be provided in the tread at substantially the same circumferential position as holes 41, as illustrated in Figure 7.

Additional V-shaped sipes 45 may be provided between the sidewall 13 of the tyre and the pair of grooves 29 which are adjacent respective edges of the tread pattern. These sipes also serve to break up larger blocks of tread material adjacent the tread edges and additionally absorb small water droplets, dissipate heat, and provide additional edges to assure gripping of the tyre tread to the road surface upon cornering. Figure 7 shows the alternative use of angled sipes 53 at the tread edges in place of the V-shaped siping grooves 45 illustrated in Figures 1 and 2.

As also illustrated in Figures 1 and 2 the water channelling grooves 17, 21, 29, the sipes and V-shaped grooves 37, 39 and 43 occupy a relatively small area as compared to the land areas formed by the tread blocks 15 thus ensuring a high degree of braking friction and the distribution of tyre load and torque over a large area.

The tyre as shown and described, obtains improved water removal from the contact patch area while eliminating continuous straight grooves running circumferentially of the tyre. This ensures that while the circumferentially intermediate portions 19 may individually lock on to a longitudinal shoulder on the road e.g. at the edge of a rain groove, the tread as a whole, due to the provision of the tread blocks which are devoid of any circumferential grooves between intermediate portions, will not lock onto any longitudinal grooves, joints or lane markings provided in a road surface. To this end there must be a sufficient length measured circumferentially of the tyre of tread block in the contact patch. In other words there must be a sufficiently high repetition of blocks and intermediate portions around the tyre circumference, the actual number sufficient to prevent loss of adequate driver control depending on a number of factors such as the size and type of tyre, and the size of contact patch. For example, about 20—25 tread blocks around the tyre circumference has been found to be adequate for a motorcycle tyre. In addition, the pattern as illustrated effectively channels water away from the contact patch area while providing enhanced compliance to the tread surface to ensure better gripping of the tread to the road surface. The pattern also provides a large number of groove edges to further improve tyre gripping.

## Claims

1. A tyre for a two wheeled single track vehicle, comprising a plurality of tread blocks (15) each one of which extends generally diagonally from one side of the tread to the other, said blocks being separated by a plurality of first grooves (17) spaced apart around the circumference of the tyre, extending continuously from one side of said tread to the other, and each comprising an intermediate portion (19) which extends substantially circumferentially of the tyre in the centre of the tread, the intermediate portions (19) of two adjacent first grooves (19) being spaced by a tread block (15) characteristised in that each of said first grooves (17) comprises diagonal portions running from the respective ends of the intermediate portion to the respective tread edge.

2. A tyre according to Claim 1 characterised in that a pair of second grooves (29) is provided, each second groove (29) being adjacent a respective side of said tread, and extending around the circumference of the tyre, said pair of second grooves (29) respectively connecting with opposite ends of each of said first grooves (17).

3. A tyre according to Claim 2 characterised in that a plurality of third grooves (21) are provided at both sides of said tread and spaced apart around the circumference of the tyre, each of said third grooves (21) extending substantially transversely of the tread and connecting with one of said second grooves (29).

4. A tyre according to either Claim 2 or 3 characterised in that said second grooves (29) follow a substantially zig-zag path along their length.

5. A tyre according to any one of claims 2, 3 or 4 characterised in that a plurality of spaced sipes (45) are provided around the circumference of the tyre axially outwards of said second grooves (29).

6. A tyre according to Claim 5 characterised in that said sipes (45) are angled.

7. A tyre according to Claim 5 characterised in that said sipes (45) are V-shaped.

8. A tyre according to any one of Claims 4 to 7 characterised in that each said second groove (29) comprises a plurality of spaced-apart groove portions (31, 33) extending in the circumferential direction of the tyre, and a plurality of V-shaped groove portions (35) interconnecting each two successive circumferential groove portions (31, 33).

9. A tyre according to Claim 8 characterised in that two successive circumferential groove portions (31, 33) of each of said second groove (29) are out of alignmnet with each other.

10. A tyre according to any one of the preceding claims characterised in that said first grooves (17) follow a substantially zig-zag diagonally-extending path except at said intermediate portions (19).

11. A tyre according to any one of the preceding claims characterised in that a plurality of spaced holes (41) are provided in said tread blocks (15).

12. A tyre according to any one of the preceding claims characterised in that a plurality of sipes (37) are formed in said tread blocks (15).

13. A tyre according to claim 12 characterised in that at least some of said sipes (37) sub-divide the tread blocks (15) separated by said first grooves (17) into smaller blocks.

14. A tyre according to any one of the preceding claims characterised in that a plurality of substantially V-shaped grooves (43) are provided in said tread blocks (15) and spaced around the circumference of the tyre.

15. A tyre according to claim 14 characterised in that said V-shaped grooves (43) are disposed on opposite sides of the centre of said tread.

## Revendications

1. Un pneumatique pour un véhicule à deux roues et une seule voie, comprenant sur la bande de roulement une pluralité de blocs (15) s'étendant chacun dans l'ensemble en diagonale d'un côté de la bande de roulement à l'autre, lesdits blocs étant séparés par une pluralité de premières rainures (17) espacées l'une de l'autre autour de la circonférence du pneumatique, s'étendant de façon continue d'un côté de ladite bande de roulement à l'autre, et comprenant chacune une partie intermédiaire (19) qui s'étend sensiblement dans la direction circonférentielle du pneumatique au centre de la bande de roulement, les parties intermédiaires (19) de deux premières rainures (17) adjacentes étant espacées par un bloc (15) de bande de roulement, caractérisé en ce que chacune desdites premières rainures (17) comprend des parties en diagaonale s'étendant depuis les extrémités respectives de la partie intermédiaire jusqu'au bord respectif de la bande de roulement.

2. Un pneumatique selon la revendication 1, caractérisé en ce qu'il est prévu une paire de secondes rainures (29), chaque seconde rainure (29) étant adjacente à un côté respectif la ladite bande de roulement et s'étendant autour de la circonférence du pneumatique, ladite paire de secondes rainures (29) étant respectivement en liaison avec des extrémités opposées de chacune desdites premières rainures (17).

3. Un pneumatique selon la revendication 2, caractérisé en ce qu'il est prévu une pluralité de troisièmes rainures (21) sur les deux côtés de ladite bande de roulement et espacées l'une de l'autre autour de la circonférence du pneumatique, chacune desdites troisièmes rainures (21) s'étendant sensiblement transversalement à la bande de roulement et étant en liaison avec une desdites secondes rainures (29).

4. Un pneumatique selon l'une des revendications 2 ou 3, caractérisé en ce que lesdites secondes rainures (29) suivent un trajet sensiblement en zigzag sur leur longueur.

5. Un pneumatique selon l'une quelconque des revendications 2, 3 ou 4, caractérisé en ce qu'une pluralité de saignées espacées (45) sont prévues autour de la circonférence du pneumatique axialement à l'extérieur desdites secondes rainures (29).

6. Un pneumatique selon la revendication 5, caractérisé en ce que lesdites saignées (45) sont auguleuses.

7. Un pneumatique selon la revendication 5, caractérisé en ce que lesdites saignées (45) sont en forme de V.

8. Un pneumatique selon l'une quelconque des revendications 4 à 7, caractérisé en ce que chacune desdites secondes rainures (29) comprend une pluralité de parties de rainures mutuellement espacées (31, 33) s'étendant dans la direction circonférentielle du pneumatique, et une pluralité de parties de rainures en forme de V (35) assurant la liaison de deux parties de rainures circonférentielles successives respectives (31, 33).

9. Un pneumatique selon la revendication 8, caractérisé en ce que deux parties de rainures circonférentialles successives (31, 33) de chacune desdites secondes rainures (29) ne sont pas alignées l'une avec l'autre.

10. Un pneumatique selon l'une quelconque des revendications précédentes, caractérisé en ce que lesdites premières rainures (17) suivent un trajet s'étendant en diagonale et sensiblement en zigzag, excepté dans lesdites parties intermédiaires (19).

11. Un pneumatique selon l'une quelconque des revendications précédentes, caractérisé en ce qu'une pluralité de trous espacés (41) sont ménagés dans lesdits blocs (15) de la bande de roulement.

12. Un pneumatique selon l'une quelconque des revendications précédentes, caractérisé en ce qu'une pluralité de saignées (37) sont ménagées dans lesdits blocs (15) de la bande de roulement.

13. Un pneumatique selon la revendication 12, caractérisé en ce qu'au moins certaines desdites saignées (37) subdivisent les blocs de bande de roulement (15), séparés par lesdites premières rainures (17) en blocs plus petits.

14. Un pneumatique selon l'une quelconque des revendications précédentes, caractérisé en ce qu'une pluralité de rainures (43) sensiblement en forme de V sont prévues dans lesdits blocs (15) de la bande de roulement et sont espacées autour de la circonférence du pneumatique.

15. Un pneumatique selon la revendication 14, caractérisé en ce que lesdites rainures (43) en forme de V sont disposées sur des côtés opposées du centre de ladite bande de roulement.

**Patentansprüche**

1. Reifen für ein einspuriges Zweieradfahrzeug, mit einer Vielzahl von Laufstreifenblöcken (15), von denen sich jeder im wesentlichen diagonal von einer Seite des Laufstreifens zur anderen erstreckt, wobei die Blöcke durch eine Vielzahl von ersten Nuten (17) voneinander getrennt sind, due über den Umfang des Reifens mit Abstand voneinander angeordnet sind, sich kontinuierlich von einer Seite des Laufstreifens zur anderen erstrecken und je einen Mittelteil (19) aufweisen, der sich im wesentlichen in Umfangsrichtung des Reifens in der Laufstreifenmitte erstreckt, wobei die Mittelteile (19) zweier benachbarter erster Nuten (17) durch einen Laufstreifenblock (15) voneinander getrennt sind, dadurch gekennzeichnet, daß jede der ersten Nuten (17) Diagonalteile aufweist, die von den zugeordneten Enden des Mittelteiles zur zugeordneten Laufstreifenkante verlaufen.

2. Reifen nach Anspruch 1, dadurch gekennzeichnet, daß ein Paar von zweiten Nuten (29) vorgesehen ist, die je einer Seite des Laufstreifens benachbart sind und sich über den Reifenumfang erstrecken, wobei das Paar von zweiten Nuten (29) jeweils mit gegenüberliegenden Enden jeder der ersten Nuten (17) in Verbindung steht.

3. Reifen nach Anspruch 2, dadurch gekennzeichnet, daß zu beiden Seiten des Laufstreifens eine Vielzahl von dritten Nuten (21) vorgesehen ist, die über den Umfang des Reifens voneinander beabstandet sind, wobei jede der dritten Nuten (21) sich im wesentlichen quer zum Laufstreifen erstreckt und mit einer der zweiten Nuten in Verbindung steht.

4. Reifen nach Anspruch 2 oder 3, dadurch gekennzeichnet, daß die zweiten Nuten (29) über ihre Länge einen im wesentlichen zickzackförmigen Verlauf haben.

5. Reifen nach einem der Ansprüche 2, 3 oder 4, dadurch gekennzeichnet, daß über den Umfang des Reifens eine Vielzahl von beabstandeten Einschnitten (45) axial außerhalb der zweiten Nuten (29) vorgesehen ist.

6. Reifen nach Anspruch 5, dadurch gekennzeichnet, daß die Einschnitte (45) abgewinkelt sind.

7. Reifen nach Anspruch 5, dadurch gekennzeichnet, daß die Einschnitte (45) V-förmig sind.

8. Reifen nach einem der Ansprüche 4 bis 7, dadurch gekennzeichnet, daß jede der zweiten Nuten (29) eine Vielzahl von beabstandeten Nutteilen (31, 33) aufweist, die in der Umfangsrichtung des Reifens verlaufen, und eine Vielzahl von V-förmigen Nutteilen (35), die jeweils zwei aufeinanderfolgende Umfangsnutteile (31, 33) miteinander verbinden.

9. Reifen nach Anspruch 8, dadurch gekennzeichnet, daß zwei aufeinanderfolgende Umfangsnutteile (31, 33) jeder der zweiten Nuten (29) außer Flucht miteinander sind.

10. Reifen nach einem der vorhergehenden Ansprüche, dadurch gekennzeichnet, daß die ersten Nuten (17) mit Ausnahme in den Mittelteilen (19) einen im wesentlichen zickzackförmigen, diagonalen Verlauf haben.

11. Reifen nach einem der vorhergehenden Ansprüche, dadurch gekennzeichnet, daß in den Laufstreifenblöcken (15) eine Vielzahl von beabstandeten Löchern (41) vorgesehen ist.

12. Reifen nach einem der vorhergehenden Ansprüche, dadurch gekennzeichnet, daß in den Laufstreifenblöcken (15) eine Vielzahl von Einschnitten (37) vorhanden ist.

13. Reifen nach Anspruch 12, dadurch gekennzeichnet, daß zumindest einige der Einschnitte (37) die durch die ersten Nuten (17) voneinander getrennten Laufstreifenblöcke (15) in kleinere Blöcke unterteilen.

14. Reifen nach einem der vorhergehenden Ansprüche, dadurch gekennzeichnet, daß in den Laufstreifenblöcken (15) eine Vielzahl von im wesentlichen V-förmigen Nuten (43) vorgesehen ist, die über den Umfang des Reifens beabstandet sind.

15. Reifen nach Anspruch 14, dadurch gekennzeichnet, daß die V-förmigen Nuten (43) auf gegenüberliegenden Seiten der Laufstreifenmitte angeordnet sind.

FIG.1

FIG.2

FIG.3

FIG.4

FIG.5

FIG.6

FIG.7